(19) **Europäisches Patentamt European Patent Office Office européen des brevets**

(11) **EP 4 583 199 A1**

(12) **EUROPEAN PATENT APPLICATION**
published in accordance with Art. 153(4) EPC

(43) Date of publication:
**09.07.2025 Bulletin 2025/28**

(21) Application number: **23915237.4**

(22) Date of filing: **09.01.2023**

(51) International Patent Classification (IPC):
***H01M 4/36*** (2006.01)

(52) Cooperative Patent Classification (CPC):
**H01M 4/36**

(86) International application number:
**PCT/CN2023/071227**

(87) International publication number:
**WO 2024/148453 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **WANG, Bangrun**
  **Ningde, Fujian 352100 (CN)**
• **ZHANG, Xingwen**
  **Ningde, Fujian 352100 (CN)**
• **LIU, Na**
  **Ningde, Fujian 352100 (CN)**

(74) Representative: **Gong, Jinping**
**CocreateIP**
**Neumarkter Straße 21**
**81673 München (DE)**

(54) **LITHIUM-RICH METAL OXIDE AND PREPARATION METHOD THEREFOR, POSITIVE ELECTRODE SHEET, BATTERY CELL, AND BATTERY**

(57) The present application provides a lithium-rich metal oxide and a preparation method thereof, a positive electrode plate, a battery cell, and a battery. The lithium-rich metal oxide includes a lithium-rich metal oxide core; and a cladding layer, where the cladding layer includes an organic layer and a carbonaceous material, the organic layer clads the lithium-rich metal oxide core, and at least a portion of the carbonaceous material is embedded in the organic layer. The lithium-rich metal oxide of the present application has high stability and conductivity, which is conducive to improving the performance of the battery cell.

FIG. 1

**Description**

**TECHNICAL FIELD**

The present application relates to the technical field of batteries, and in particular, to a lithium-rich metal oxide and a preparation method thereof, a positive electrode plate, a battery cell, and a battery.

**BACKGROUND**

With the increasing environmental pollution, new energy industry is attracting more and more attention. In the new energy industry, battery technology is an important factor for its development.

A lithium-rich metal oxide, as a material for preparing a positive electrode plate of a battery cell, is critical to the performance of the battery cell. Therefore, how to provide a lithium-rich metal oxide that can achieve both stability and conductivity of the lithium-rich metal oxide to improve the performance of the battery cell is an urgent technical problem to be solved.

**SUMMARY**

In view of the problem above, the present application aims to provide a lithium-rich metal oxide that achieves both stability and conductivity to improve the performance of a battery cell.

To achieve the foregoing objective, the present application provides a lithium-rich metal oxide and a preparation method thereof, a positive electrode plate, a battery cell, and a battery.

In a first aspect, the present application provides a lithium-rich metal oxide including a lithium-rich metal oxide core; and a cladding layer, where the cladding layer includes an organic layer and a carbonaceous material, the organic layer clads the lithium-rich metal oxide core, and at least a portion of the carbonaceous material is embedded in the organic layer.

The present application provides a lithium-rich metal oxide including a lithium-rich metal oxide core and a cladding layer, where the cladding layer includes an organic layer and a carbonaceous material, the organic layer clads the lithium-rich metal oxide core, and the carbonaceous material is embedded in the organic layer. A content of lithium ions in the lithium-rich metal oxide core is higher than that in a general lithium-containing metal oxide, so preparation of a positive electrode material by selecting the lithium-rich metal oxide core is conducive to improving the charging capacity of the battery cell. Cladding the lithium-rich metal oxide core with the organic layer can reduce the risk of the lithium-rich metal oxide core reacting with water, carbon dioxide, and the like in air, thereby reducing the effect of by-products generated on the surface of the lithium-rich metal oxide core on the processing of a positive electrode plate, and reducing the effect of the by-products on the deintercalation of lithium ions from the lithium-rich metal oxide core, which further reduces the effect on the charging capacity of the battery cell. In addition, embedding the carbonaceous material in the organic layer is conducive to improving the conductivity of the lithium-rich metal oxide. Therefore, the lithium-rich metal oxide according to the present application has high stability and conductivity, which is conducive to improving the performance of the battery cell when applied to the battery cell.

In a possible embodiment, at least a portion of the carbonaceous material penetrates through the organic layer. In this way, on the one hand, it is conducive to further improving the conductivity of the lithium-rich metal oxide; on the other hand, the carbonaceous material can act as a channel for transporting ions, which is conducive to improving a diffusion coefficient of ions, e.g., lithium ions.

In a possible embodiment, the carbonaceous material includes a monolithic carbon material. Optionally, the monolithic carbon material includes a one-dimensional carbon material. Optionally, the one-dimensional carbon material includes a carbon nanotube.

In the foregoing solution, the carbonaceous material includes a monolithic carbon material. In this way, it can reduce the effect of the decomposition of the carbonaceous material in the process of cladding the lithium-rich metal oxide on the conductivity of the lithium-rich metal oxide. The monolithic carbon material includes a one-dimensional carbon material, which is conducive to achieving embedding or penetration of the carbonaceous material in the organic layer. The one-dimensional carbon material includes a carbon nanotube, which is conducive to improving the electronic conductivity of the lithium-rich metal oxide by virtue of the high conductivity of the carbon nanotube; furthermore, a hollow tube inside the carbon nanotube can accommodate an electrolyte solution, the electrolyte solution can be contacted with the lithium-rich metal oxide core through the hollow tube, and the hollow tube can also be used as an ion channel for transporting lithium ions. Therefore, by selecting the carbon nanotube as the carbonaceous material, it is conducive to further improving the conductivity of the lithium-rich metal oxide.

In a possible embodiment, the carbon nanotube includes one or more of single-walled carbon nanotubes and multi-walled carbon nanotubes. This facilitates the flexible selection of different types of carbon nanotubes according to an actual situation.

In a possible embodiment, the carbon nanotube has a length-to-diameter ratio of 100:1 to 1000:1, and optionally 200:1 to 400: 1. When the length-to-diameter ratio of the carbon nanotube is too large, the carbon nanotube is likely to agglomerate. In this way, the dispersion of the carbon nanotube is poor in the process of cladding the lithium-rich metal oxide core, which is not conducive to uniformly cladding the lithium-rich metal oxide core with the carbon nanotube. When the length-to-diameter ratio of the carbon nanotube is too small, the effect of transporting electrons and ions by the carbon nanotube is affected. By setting the length-to-diameter ratio of the carbon nanotube to be within a suitable range, the cladding effect on the lithium-rich metal oxide core and the conductivity of the lithium-rich metal oxide both can be achieved.

In a possible embodiment, the mass ratio of the carbon nanotube to the lithium-rich metal oxide is 0.2% to 2%, and optionally 0.5% to 1.5%. When the content of the carbon nanotube is too high, agglomeration occurs in the process of mixing, which is not conducive to achieving the cladding uniformity and affects the stability of the lithium-rich metal oxide. When the content of the carbon nanotube is too small, the conductivity of the lithium-rich metal oxide decreases, and at the same time the transmission path and the diffusion path of lithium ions decrease, which affects the charging capacity of a battery cell prepared from the lithium-rich metal oxide. By reasonably setting the proportion of the carbon nanotube in the lithium-rich metal oxide, it is conducive to achieving the stability and conductivity of the lithium-rich metal oxide and the charging capacity of the battery cell.

In a possible embodiment, the organic layer has a softening temperature not greater than 450°C, and optionally, not greater than 300°C. The organic matter becomes a flow state after being softened, so as to extensively and uniformly clad the lithium-rich metal oxide core. By selecting an organic matter having a lower softening temperature, a uniform and dense cladding on the lithium-rich metal oxide core can be achieved at a lower temperature.

In a possible embodiment, the median particle diameter $Dv_{50}$ of the lithium-rich metal oxide is 2 $\mu$m to 10 $\mu$m, and optionally 4 $\mu$m to 8 $\mu$m. When the median particle diameter of the lithium-rich metal oxide is too large, the path for lithium ions to be deintercalated from the lithium-rich metal oxide core is too long, which is not conducive to the deintercalation of lithium ions and affects the charging capacity of the battery cell prepared from the lithium-rich metal oxide. When the median particle diameter of the lithium-rich metal oxide is too small, the surface activity of the lithium-rich metal oxide is strong, and lithium-rich metal oxide particles or lithium-rich metal oxide core particles are likely to agglomerate among each other, and the particles are poorly dispersed, which is not conducive to achieving cladding uniformity. By reasonably setting the median particle diameter of the lithium-rich metal oxide, the cladding uniformity of the lithium-rich metal oxide and the charging capacity of the battery cell can both be achieved.

In a possible embodiment, the mass ratio of the cladding layer to the lithium-rich metal oxide is 1% to 10%, and optionally 3% to 7%. An excessively high content of the cladding layer inhibits the deintercalation of lithium ions and affects the charging capacity of the battery cell; an excessively low content of the cladding layer is not conducive to the formation of a uniform and complete cladding on the surface of the lithium-rich metal oxide core, resulting in a poorer cladding effect, poorer stability of the lithium-rich metal oxide, and at the same time affecting the charging capacity of the battery cell.

In a possible embodiment, a material of the lithium-rich metal oxide core includes $Li_aM^nO_y$, and $2 \leq a \leq 8$, where the $Li_aM^nO_y$ includes one or more of $Li_2M^1O_2$, $Li_2M^2O_3$, $Li_3M^3O_4$, $Li_5M^4O_4$, $Li_6M^5O_4$, and $Li_8M^6O_6$; $M^1$ includes one or more of Ni, Co, Fe, Mn, Zn, Mg, Ca, Cu, and Mo; $M^2$ includes one or more of Mn, Sn, Mo, Ru, and Ir; $M^3$ includes one or more of V, Nb, Cr, and Mo; $M^4$ includes one or more of Fe, Cr, V, and Mo; $M^5$ includes one or more of Co, V, Cr, and Mo; and $M^6$ includes Sn. Optionally, the $Li_aM^nO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, and $Li_8SnO_6$. This facilitates the flexible selection of a suitable lithium-rich metal oxide core according to an actual need.

In a possible embodiment, a material of the organic layer includes one or more of rubber, pitch, polypropylene, polyethylene, polystyrene, polycarbonate, polymethyl methacrylate, polyethylene terephthalate, polyvinylidene difluoride, and polytetrafluoroethylene. Optionally, the material of the organic layer includes one or more of rubber, pitch and polyvinylidene difluoride. This facilitates the flexible selection of the material of the organic layer according to an actual need.

In a second aspect, the present application provides a method for preparing a lithium-rich metal oxide, including: providing a lithium-rich metal oxide core, a carbonaceous material and an organic matter; and mixing the lithium-rich metal oxide core, the carbonaceous material and the organic matter, and conducting treatment to obtain the lithium-rich metal oxide. The lithium-rich metal oxide prepared by the method has high conductivity and stability, which is conducive to improving the performance of the battery cell when applied to the battery cell.

In a possible embodiment, the treatment includes: sintering in an inert atmosphere for 2 h to 6 h. This facilitates obtaining a uniformly cladded lithium-rich metal oxide. Optionally, the inert atmosphere includes one or more of nitrogen gas, argon gas and helium gas. This facilitates the selection of suitable inert gas according to an actual need. Optionally, the temperature of the treatment is not higher than 500°C, and optionally, the temperature of the sintering is not higher than 300°C. In this way, a lithium-rich metal oxide with a uniform, dense cladding layer can be achieved at a lower temperature.

In a possible embodiment, the method further includes: sieving a product obtained after the treatment to obtain the lithium-rich metal oxide. This facilitates obtaining the lithium-rich metal oxide having a suitable particle diameter.

In a possible embodiment, the carbonaceous material includes a monolithic carbon material; optionally, the monolithic carbon material includes a one-dimensional carbon material; and optionally, the one-dimensional carbon material includes a carbon nanotube. In this way, it can reduce the effect of decomposition of the carbonaceous material in the process of preparing the lithium-rich metal oxide on the conductivity of the lithium-rich metal oxide. The monolithic carbon material includes a one-dimensional carbon material, which is conducive to achieving embedding or penetration of the carbonaceous material in the organic layer. The one-dimensional carbon material includes a carbon nanotube, which is conducive to improving the electronic conductivity of the lithium-rich metal oxide by virtue of the high conductivity of the carbon nanotube; furthermore, a hollow tube inside the carbon nanotube can accommodate an electrolyte solution, the electrolyte solution can be in contact with the lithium-rich metal oxide core through the hollow tube, and the hollow tube can also be used as an ion channel for transporting lithium ions. Therefore, by selecting the carbon nanotube as the carbonaceous material, it is conducive to further improving the conductivity of the lithium-rich metal oxide.

In a possible embodiment, the carbon nanotube includes one or more of single-walled carbon nanotubes and multi-walled carbon nanotubes. This facilitates the flexible selection of different types of carbon nanotubes according to an actual situation.

In a possible embodiment, the carbon nanotube has a length-to-diameter ratio of 100:1 to 1000:1, and optionally 200:1 to 400: 1. In this way, the cladding effect on the lithium-rich metal oxide core and the conductivity of the lithium-rich metal oxide both can be achieved.

In a possible embodiment, a softening temperature of the organic matter is less than a temperature of the treatment. Optionally, the softening temperature of the organic matter is not higher than 450°C, and optionally not higher than 300°C. In this way, the organic matter is softened at the sintering temperature to be in a flow state, which is conducive to achieving a uniform, dense cladding on the lithium-rich metal oxide core.

In a possible embodiment, the organic matter includes one or more of rubber, pitch, polypropylene, polyethylene, polystyrene, polycarbonate, polymethyl methacrylate, polyethylene terephthalate, polyvinylidene difluoride, and polytetrafluoroethylene. Optionally, the organic matter includes one or more of rubber, pitch and polyvinylidene difluoride. This facilitates the flexible selection of materials of organic matters according to an actual need.

In a possible embodiment, the providing a lithium-rich metal oxide core includes: mixing a Li source and a Mn source evenly according to a molar ratio of (a+0.05):1 to a:1, and then conducting single heating-up sintering in an inert atmosphere at a sintering temperature of 400°C to 600°C for 4 h to 8 h; where the Li source includes one or more of lithium oxide, lithium carbonate, lithium oxalate, lithium acetate, and lithium hydroxide, the Mn source includes one or more of oxides, hydroxides, halides, sulfates, carbonates, nitrates, oxalates, acetates, sulfides, and nitrides of $M^n$; optionally, the sintering temperature is 450°C to 550°C; and optionally, the inert atmosphere includes one or more of nitrogen gas, argon gas, and helium gas; and subjecting a product obtained through single heating-up sintering to airflow crushing to obtain the lithium-rich metal oxide core. In this way, a suitable lithium-rich metal oxide core is prepared, which is conducive to subsequent preparation of the lithium-rich metal oxide.

In a third aspect, a positive electrode plate is provided, including a lithium-rich metal oxide according to the first aspect and any one of the possible embodiments.

In a fourth aspect, a battery cell is provided, including a positive electrode plate according to the third aspect.

In a fifth aspect, a battery is provided, including the battery cell according to the fourth aspect.

In a sixth aspect, an electrical device is provided, including the battery according to the fifth aspect.

The present application provides a lithium-rich metal oxide including a lithium-rich metal oxide core and a cladding layer, where the cladding layer includes an organic layer and a carbonaceous material, the organic layer clads the lithium-rich metal oxide core, and the carbonaceous material is embedded in the organic layer. A content of lithium ions in the lithium-rich metal oxide core is higher than that in a general lithium-containing metal oxide, so preparation of a positive electrode material by selecting the lithium-rich metal oxide core is conducive to improving the charging capacity of the battery cell. Cladding the lithium-rich metal oxide core with the organic layer can reduce the risk of the lithium-rich metal oxide core reacting with water, carbon dioxide, and the like in air, thereby reducing the effect of by-products generated on the surface of the lithium-rich metal oxide core on the processing of a positive electrode plate, and reducing the effect of the by-products on the deintercalation of lithium ions from the lithium-rich metal oxide core, which further reduces the effect on the charging capacity of the battery cell. In addition, embedding the carbonaceous material in the organic layer is conducive to improving the conductivity of the lithium-rich metal oxide. Therefore, the lithium-rich metal oxide according to the present application has high stability and conductivity, which is conducive to improving the performance of the battery cell when applied to the battery cell.

**BRIEF DESCRIPTION OF DRAWINGS**

FIG. 1 is a schematic diagram of a lithium-rich metal oxide according to an embodiment of the present application.

FIG. 2 is a flowchart of a method for preparing a lithium-rich metal oxide according to an embodiment of the present application.

FIG. 3 is a schematic diagram of a battery cell according to an embodiment of the present application.

FIG. 4 is a schematic diagram of a battery module according to an embodiment of the present application.

FIG. 5 is a schematic diagram of a battery according to an embodiment of the present application.

FIG. 6 is a schematic diagram of an electrical device according to an embodiment of the present application.

FIG. 7 is a schematic diagram of a scanning electron microscope of a lithium-rich metal oxide not provided with a cladding layer.

FIG. 8 is a schematic diagram of a scanning electron microscope of a lithium-rich metal oxide provided with a cladding layer according to the present application.

## DETAILED DESCRIPTION OF EMBODIMENTS

The following describes in detail a negative electrode plate, a secondary battery, a battery module, a battery pack, and an electrical device according to embodiments of the present application with due reference to drawings. However, there may be cases in which unnecessary detailed descriptions are omitted. For example, detailed descriptions of a well-known matter or duplicated descriptions of a substantially identical structure may be omitted. That is intended to prevent the following descriptions from becoming unnecessarily lengthy, and to facilitate understanding by a person skilled in the art. In addition, the drawings and the following description are intended for a person skilled in the art to thoroughly understand the present application, but not intended to limit the subject matter set forth in the claims.

A "range" disclosed herein is defined in the form of a lower limit and an upper limit. A given range is defined by selecting a lower limit and an upper limit that define the boundaries of a particular range. A range so defined may be inclusive or exclusive of the end values, and a lower limit of one range may be arbitrarily combined with an upper limit of another range to form a range. For example, if the ranges 60 to 120 and 80 to 110 are listed for a particular parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. In the present application, unless otherwise noted, the numerical range "a-b" denotes an abbreviated representation of any combination of real numbers between a and b, where both a and b are real numbers. For example, the numerical range "0-5" means that all the real numbers between "0-5" have been listed herein, and "0-5" is only an abbreviated representation of these numerical combinations. In addition, a statement that a parameter is an integer greater than or equal to 2 is equivalent to a disclosure that the parameter is an integer such as 2, 3, 4, 5, 6, 7, 8, 9, 10, 11, and 12.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed sequentially or randomly, and preferably, performed sequentially. For example, the method includes steps (a) and (b), indicating that the method may include steps (a) and (b) performed sequentially, and may also include steps (b) and (a) performed sequentially. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified, "include" and "include" mentioned herein mean open-ended inclusion, or closed-ended inclusion. For example, the terms "include" and "include" may mean inclusion of other items that are not recited, or inclusion of only the items recited.

Unless otherwise expressly specified, the term "or" used herein is inclusive. For example, the phrase "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A lithium-ion battery is widely used in fields such as mobile phones, electric vehicles, and power storage stations by virtue of its high energy density, high voltage, and long life. A lithium-rich metal oxide in the lithium-ion battery is critical to the performance of the lithium-ion battery, such as capacity.

The lithium-rich metal oxide has a high content of lithium ions and is widely used in the preparation of lithium-ion batteries. However, the stability of the lithium-rich metal oxide is poor. In the prior art, in order to improve the performance of the lithium-rich metal oxide, the lithium-rich metal oxide is usually cladded with carbon or polymer, so as to improve the conductivity or stability of the lithium-rich metal oxide. However, the applicant has found that it is often difficult to achieve both the stability and conductivity of the lithium-rich metal oxide when the lithium-rich metal oxide is cladded with only a single carbon source, which is not conducive to improving the comprehensive performance of the lithium-rich metal oxide, and is not conducive to improving the performance of the lithium-ion battery.

In view of this, the present application provides a lithium-rich metal oxide. A cladding layer in the lithium-rich metal oxide includes an organic matter and a carbonaceous material, which can achieve both the stability and conductivity of the lithium-rich metal oxide, and is conducive to improving the performance of the battery cell.

[Lithium-rich metal oxide]

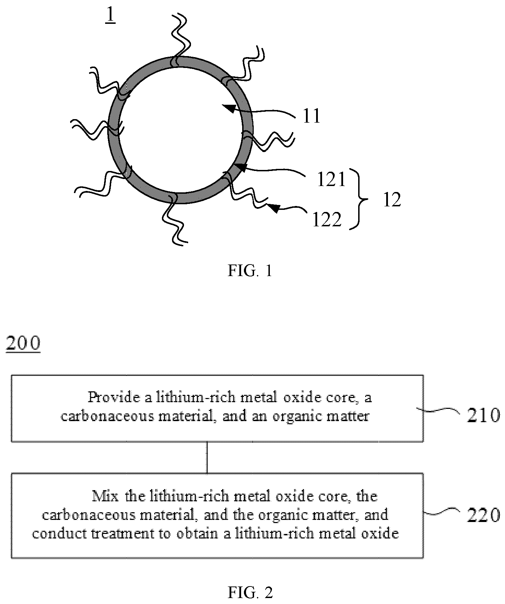

FIG. 1 is a schematic diagram of a lithium-rich metal oxide according to an embodiment of the present application. As shown in FIG. 1, the lithium-rich metal oxide 1 includes a lithium-rich metal oxide core 11 and a cladding layer 12.

The content of lithium ions in the lithium-rich metal oxide core 11 is higher than that of a general lithium-containing metal oxide, so preparation of the battery cell by selecting the lithium-rich metal oxide core 11 is conducive to improving the charging capacity of the battery cell.

The cladding layer 12 clads the lithium-rich metal oxide core 11, that is, the lithium-rich metal oxide core 11 is cladded as a core of the lithium-rich metal oxide 1 inside the cladding layer 12.

The cladding layer 12 includes an organic layer 121 and a carbonaceous material 122, where the organic layer 121 clads the lithium-rich metal oxide core 11, and at least a portion of the carbonaceous material 122 is embedded in the organic layer 121.

The organic layer 121 is a material layer formed by an organic matter, and the organic layer 121 clads an outer surface of the lithium-rich metal oxide core 11.

The lithium-rich metal oxide core 11 is likely to react with water, carbon dioxide, and the like in air, thereby generating by-products on the surface of the lithium-rich metal oxide core 11, such as $Li_2CO_3$, LiOH, and other lithium-containing inert compounds. These by-products or lithium-containing inert compounds are dissociated on the surface of the lithium-rich metal oxide core 11, which affects deintercalation of lithium ions from the lithium-rich metal oxide core 11, resulting in a reduction in the performance of the lithium-rich metal oxide and the charging capacity of the battery cell. In addition, the lithium-containing inert compounds are highly alkaline, and when the lithium-rich metal oxide core 11 is mixed with a binder to form a slurry for preparing a positive electrode plate, these inert compounds affect the performance of the binder, causing the binder, for example, polyvinylidene fluoride (PVDF) to be denatured, and affecting the performance of the slurry and the coating of the slurry, thereby affecting the processing of the positive electrode plate.

By cladding the lithium-rich metal oxide core 11 with the organic layer 121, the risk of a side reaction of the lithium-rich metal oxide core 11 can be reduced, which is conducive to improving the stability of the lithium-rich metal oxide 1; and it can reduce the effect of the lithium-containing inert compound on the processing of the positive electrode plates, and also lower the effect of the by-products on the charging capacity of the battery cell, and the performance of the lithium-rich metal oxide, which is conducive to improving the performance of the lithium-rich metal oxide and the charging capacity of the battery cell.

Optionally, the charging capacity of the battery cell may include a first turn charging capacity of the battery cell, where lithium ions are deintercalated from the positive electrode plate during charging of the battery cell. For example, the charging capacity of the battery cell may be a ratio of the capacity of the battery cell to the mass of the active material in the battery cell after the charging of the battery cell is completed.

The carbonaceous material 122, including a carbon-containing, electrically conductive material, may include a monolithic carbon material.

At least a portion of the carbonaceous material 122 in the cladding layer 12 is embedded in the organic layer 121. For example, the cladding layer 12 includes a plurality of carbonaceous material particles, and at least one carbonaceous material particle is embedded in the organic layer 121.

Embedding may include: a portion of the carbonaceous material particles are embedded in the organic layer 121, the carbonaceous material particles are adsorbed onto the organic layer 121, or all of the carbonaceous material particles are embedded in the organic layer 121.

By making the carbonaceous material 122 be embedded in the organic layer 121, it is conducive to improving the conductivity of the organic layer 121, i.e., it is conducive to reducing the resistivity of the lithium-rich metal oxide 1 and improving the conductivity of the lithium-rich metal oxide 1.

Optionally, the lithium-rich metal oxide 1 of the present application can be used as a lithium replenishing agent. Optionally, the lithium-rich metal oxide of the present application can also be used as an active agent, which is mixed with a binder and a conductive agent to prepare a positive electrode plate.

The present application provides a lithium-rich metal oxide 1 including a lithium-rich metal oxide core 11 and a cladding layer 12, where the cladding layer 12 includes an organic layer 121 and a carbonaceous material 122, the organic layer 121 clads the lithium-rich metal oxide core 11, and the carbonaceous material 122 is embedded in the organic layer 121. The content of lithium ions in the lithium-rich metal oxide core 11 is higher than that in a general lithium-containing metal oxide, so preparation of a positive electrode material by selecting the lithium-rich metal oxide core 11 is conducive to improving the charging capacity of the battery cell. Cladding the lithium-rich metal oxide core 11 with the organic layer 121 can reduce the risk of the lithium-rich metal oxide core 11 reacting with water, carbon dioxide, and the like in air, thereby reducing the effect of by-products generated on the surface of the lithium-rich metal oxide core 11 on the processing of the positive electrode plate, and reducing the effect of the by-products on the deintercalation of lithium ions from the lithium-rich metal oxide core 11, and thus reducing the effect on the charging capacity of the battery cell. In addition, the carbonaceous material 122 is embedded in the organic layer 121, which is conducive to improving the conductivity of the lithium-rich metal oxide 1. Therefore, the lithium-rich metal oxide 1 according to the present application has high stability and conductivity, which is conducive to improving the performance of the battery cell when applied to the battery cell.

In some embodiments, at least a portion of the carbonaceous material 122 penetrates through the organic layer 121. That is, the carbonaceous material 122 is embedded in the organic layer 121 and extends from a surface of the organic layer 121 proximate the lithium-rich metal oxide core 11 to a surface of the organic layer 121 away from the lithium-rich metal oxide core 11. In this way, the carbonaceous material 122 is in contact with both the lithium-rich metal oxide core 11 and the exterior of the lithium-rich metal oxide 1, such as with an electrolyte solution or an electrolyte.

Optionally, at least a portion of the carbonaceous material 122 penetrates through the organic layer 121 and extends to a surface of the organic layer 121 away from the lithium-rich metal oxide core 11. In this way, the carbonaceous material 122 can be in contact with the external environment, such as an electrolyte solution, and can be used to transport lithium ions.

In the above embodiment, at least a portion of the carbonaceous material 122 penetrates through the organic layer 121. In this way, on the one hand, it is conducive to further improving the conductivity of the lithium-rich metal oxide 1; on the other hand, the carbonaceous material 122 can serve as a channel for transporting ions, which is conducive to improving the diffusion coefficient of ions, e.g., lithium ions.

In some embodiments, the carbonaceous material 122 includes a monolithic carbon material. In this way, it can reduce the effect of the decomposition of the carbonaceous material 122 in the process of cladding the lithium-rich metal oxide 1 on the conductivity of the lithium-rich metal oxide 1.

The monolithic carbon material can include a zero-dimensional carbon material, a one-dimensional carbon material, and a two-dimensional carbon material. The zero-dimensional carbon material can include carbon black, fullerene C60, etc.; the one-dimensional carbon material can include a carbon nanotube with an internal hollow structure, a carbon nanofiber without an obvious internal hollow structure, etc.; and the two-dimensional carbon material can include graphene, etc.

Optionally, in some embodiments, the monolithic carbon material 122 includes a one-dimensional carbon material. This is conducive to the embedding or penetration of the carbonaceous material in the organic layer 121.

Optionally, in some embodiments, the one-dimensional carbon material includes a carbon nanotube.

The carbon nanotube has high conductivity, and providing the carbon nanotube inside the cladding layer 12 is conducive to improving the electronic conductivity of the lithium-rich metal oxide 1. In addition, the hollow tube inside the carbon nanotube can accommodate the electrolyte solution, the electrolyte solution can be in contact with the lithium-rich metal oxide core 11 through the hollow tube, and the hollow tube can also be used as an ion channel for transporting lithium ions. Therefore, by selecting the carbon nanotube as the carbonaceous material 122, it is conducive to further improving the conductivity of the lithium-rich metal oxide 1.

In some embodiments, the carbon nanotube includes one or more of single-walled carbon nanotubes and multi-walled carbon nanotubes. This facilitates the flexible selection of different types of carbon nanotubes according to an actual situation.

In some embodiments, the carbon nanotube has a length-to-diameter ratio of 100:1 to 1000:1, and optionally 200:1 to 400:1.

The length-to-diameter ratio of the carbon nanotube is a ratio of the length to the outer diameter of the carbon nanotube.

In a case where the length-to-diameter ratio of the carbon nanotube is greater than 1000:1, the carbon nanotube has a greater length and is likely to agglomerate. This results in poor dispersion of the carbon nanotube in the process of cladding the lithium-rich metal oxide core 11, which is not conducive to uniformly cladding the lithium-rich metal oxide core 11 with the carbon nanotube.

In a case where the length-to-diameter ratio of the carbon nanotube is less than 100:1, the length of the carbon nanotube is smaller and the hollow tube of the carbon nanotube is shorter, which affects the effect of the carbon nanotube on the transport of electrons and ions.

In this embodiment, by setting the length-to-diameter ratio of the carbon nanotube to be 100:1 to 1000:1, the cladding effect on the lithium-rich metal oxide core 11 and the conductivity of the lithium-rich metal oxide 1 both can be achieved.

Optionally, by setting the length-to-diameter ratio of the carbon nanotube to be 200:1 to 400:1, it is conducive to further improving the cladding effect on the lithium-rich metal oxide core 11 and the conductivity of the lithium-rich metal oxide 1.

In some embodiments, the mass ratio of the carbon nanotube to the lithium-rich metal oxide 1 is 0.2% to 2%, and optionally 0.5% to 1.5%.

In a case where the mass ratio of the carbon nanotube to the lithium-rich metal oxide 1 is greater than 2%, in the process of mixing the carbon nanotube, or mixing the carbon nanotube with the organic matter and the lithium-rich metal oxide core 11, the carbon nanotube agglomerates, which is not conducive to achieving cladding uniformity, and affects the cladding effect and the stability of the lithium-rich metal oxide 1.

In a case where the mass ratio of the carbon nanotube to the lithium-rich metal oxide is less than 0.2%, the content of carbon nanotube is too small, and the conductivity of the lithium-rich metal oxide 1 decreases, while the lithium ion transport path and diffusion path are reduced, which affects the performance of the lithium-rich metal oxide 1 and the charging capacity of a prepared battery cell.

In this embodiment, by setting the mass ratio of the carbon nanotube to the lithium-rich metal oxide 1 to be 0.2% to 2%, it is conducive to achieving both the stability and conductivity of the lithium-rich metal oxide 1, as well as the charging capacity of the battery cell.

Optionally, the mass ratio of the carbon nanotube to the lithium-rich metal oxide 1 is 0.5% to 1.5%, which is conducive to further improving the stability and conductivity of the lithium-rich metal oxide 1 and the charging capacity of the battery cell.

In some embodiments, the softening temperature of the organic layer 121 is not higher than 450°C, and optionally, not higher than 300°C.

The softening temperature can be the temperature at which the organic matter changes from a solid state to a flow state, or the temperature at which the organic matter changes from a solid state to a molten state. After reaching the softening temperature of the organic matter, the organic matter is in a flow state or a molten state.

The organic matter is molten into a flow state after being softened, so as to extensively and uniformly clad the lithium-rich metal oxide core 11, thereby forming the organic layer 121. By selecting an organic matter having a lower softening temperature, a uniform, dense cladding on the lithium-rich metal oxide core 11 can be achieved at a lower temperature.

In some embodiments, the lithium-rich metal oxide 1 has a median particle diameter $Dv_{50}$ of 2 $\mu$m to 10 $\mu$m, and optionally 4 $\mu$m to 8 $\mu$m.

The median particle diameter $Dv_{50}$ is a particle diameter corresponding to a sample with a cumulative volume distribution percentage reaching 50%.

The median particle diameter $Dv_{50}$ of the lithium-rich metal oxide 1 is related to the median particle diameter of the lithium-rich metal oxide core 11. The greater the median particle diameter of the lithium-rich metal oxide core 11 is, the greater the median particle diameter $Dv_{50}$ of the lithium-rich metal oxide 1 is; and the smaller the median particle diameter of the lithium-rich metal oxide core 11 is, the smaller the median particle diameter $Dv_{50}$ of the lithium-rich metal oxide 1 is.

In a case where the median particle diameter $Dv_{50}$ of the lithium-rich metal oxide 1 is greater than 10 $\mu$m, the path for lithium ions to be deintercalated from the lithium-rich metal oxide core 11 is too long, which is not conducive to the deintercalation of lithium ions and affects the performance of the lithium-rich metal oxide 1 and the capacity of the prepared battery cell.

In a case where the median particle diameter $Dv_{50}$ of the lithium-rich metal oxide 1 is less than 2 $\mu$m, the surface activity of the lithium-rich metal oxide 1 is strong, lithium-rich metal oxide particles or lithium-rich metal oxide core particles are likely to agglomerate among each other, and the particles are poorly dispersed, which is not conducive to achieving cladding uniformity.

In this embodiment, by setting the median particle diameter $Dv_{50}$ of the lithium-rich metal oxide 1 to be 2 $\mu$m to 10 $\mu$m, the cladding uniformity of the lithium-rich metal oxide 1 and the capacity of the battery cell prepared by the lithium-rich metal oxide both can be achieved.

Optionally, the median particle diameter $Dv_{50}$ of the lithium-rich metal oxide 1 is 4 $\mu$m to 8 $\mu$m, which is conducive to further improving the cladding uniformity of the lithium-rich metal oxide 1 and the capacity of the battery cell.

In some embodiments, the mass ratio of the cladding layer 12 to the lithium-rich metal oxide 1 is 1% to 10%, and optionally 3% to 7%.

In a case where the mass ratio of the cladding layer 12 to the lithium-rich metal oxide 1 is greater than 10%, the content of the cladding layer 12 is too high, which inhibits deintercalation of lithium ions and affects the charging capacity of the battery cell.

In a case where the mass ratio of the cladding layer 12 to the lithium-rich metal oxide 1 is less than 1%, the content of the cladding layer 12 is too low, which is not conducive to forming a uniform and complete cladding on the surface of the lithium-rich metal oxide core 11, resulting in a poorer cladding effect, poorer stability of the lithium-rich metal oxide 1, and at the same time affecting the charging capacity of the battery cell.

In this embodiment, by setting the mass ratio of the cladding layer 12 to the lithium-rich metal oxide 1 to be 1% to 10%, the stability of the lithium-rich metal oxide 1 and the capacity of the prepared battery cell both can be achieved.

Optionally, the mass ratio of the cladding layer 12 to the lithium-rich metal oxide 1 is 3% to 7%, which is conducive to further improving the stability of the lithium-rich metal oxide 1 and the capacity of the prepared battery cell.

In some embodiments, a material of the lithium-rich metal oxide core 11 includes $Li_aM^nO_y$, and $2 \leq a \leq 8$, where the $Li_aM^nO_y$ includes one or more of $Li_2M^1O_2$, $Li_2M^2O_3$, $Li_3M^3O_4$, $Li_5M^4O_4$, $Li_6M^5O_4$, and $Li_8M^6O_6$; $M^1$ includes one or more of Ni, Co, Fe, Mn, Zn, Mg, Ca, Cu, and Mo; $M^2$ includes one or more of Mn, Sn, Mo, Ru, and Ir; $M^3$ includes one or more of V, Nb, Cr, and Mo; $M^4$ includes one or more of Fe, Cr, V, and Mo; $M^5$ includes one or more of Co, V, Cr, and Mo; and $M^6$ includes Sn. Optionally, the $Li_aM^nO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, and $Li_8SnO_6$. This facilitates the flexible selection of a suitable lithium-rich metal oxide core according to an actual need.

In some embodiments, a material of the organic layer 121 includes one or more of rubber, pitch, polypropylene, polyethylene, polystyrene, polycarbonate, polymethyl methacrylate, polyethylene terephthalate, polyvinylidene difluoride, and polytetrafluoroethylene. Optionally, the material of the organic layer 121 includes one or more of rubber, pitch and polyvinylidene difluoride. This facilitates the flexible selection of the material of the organic layers according to an actual need.

The softening temperature of rubber is approximately 140°C, the softening temperature of pitch is approximately 250°C, the softening temperature of polypropylene is approximately 165°C, the softening temperature of polyethylene is approximately 180°C, the softening temperature of polystyrene is approximately 166°C, the softening temperature of polycarbonate is approximately 215°C, the softening temperature of polymethyl methacrylate is approximately 160°C, the softening temperature of polyethylene terephthalate is approximately 250°C, the softening temperature of polyvinylidene difluoride is approximately 160°C, and the softening temperature of polytetrafluoroethylene is approximately330°C.

Embodiments of the lithium-rich metal oxide of the present application are described above with reference to FIG. 1, and embodiments of the method for preparing the lithium-rich metal oxide are described in detail below. For parts that are not described in the embodiments of the method for preparing the lithium-rich metal oxide, reference can made to the relevant descriptions of the embodiments of the lithium-rich metal oxide.

[Method for preparing a lithium-rich metal oxide]

FIG. 2 is a flowchart of a method for preparing a lithium-rich metal oxide according to an embodiment of the present application. As shown in FIG. 2, the method 200 for preparing a lithium-rich metal oxide includes the following steps:

Step 210: Provide a lithium-rich metal oxide core, a carbonaceous material, and an organic matter.
Step 220: Mix the lithium-rich metal oxide core, the carbonaceous material and the organic matter, and conduct treatment to obtain the lithium-rich metal oxide.

The lithium-rich metal oxide 1 prepared by the method of the present application has high conductivity and stability, which is conducive to improving the performance of the battery cell.

Optionally, the lithium-rich metal oxide prepared by the method 200 is the same as the lithium-rich metal oxide described above. In addition, the lithium-rich metal oxide prepared by the method 200 may also be structurally different from the lithium-rich metal oxide described above.

In some embodiments, the above treatment includes: sinter in an inert atmosphere for 2 h to 6 h. This facilitates obtaining a uniformly cladded lithium-rich metal oxide 1.

In some embodiments, the inert atmosphere includes one or more of nitrogen gas, argon gas, and helium gas. This facilitates the selection of suitable inert gas according to an actual need.

In some embodiments, the temperature of the above treatment is not higher than 500°C, and optionally, the above temperature is not higher than 300°C. In this way, the lithium-rich metal oxide 1 with a uniform, dense cladding layer can be achieved at a lower temperature.

In some embodiments, the method further includes: sieving a product obtained after the above treatment to obtain the lithium-rich metal oxide 1. This facilitates obtaining the lithium-rich metal oxide 1 having a suitable particle diameter.

In some embodiments, the carbonaceous material includes a monolithic carbon material; optionally, the monolithic carbon material includes a one-dimensional carbon material; and optionally, the one-dimensional carbon material includes a carbon nanotube. In this way, it can reduce the effect of decomposition of the carbonaceous material in the process of preparing the lithium-rich metal oxide on the conductivity of the lithium-rich metal oxide. The monolithic carbon material includes a one-dimensional carbon material, which is conducive to achieving embedding or penetration of the carbonaceous material in the organic layer. The one-dimensional carbon material includes a carbon nanotube, which is conducive to improving the electronic conductivity of the lithium-rich metal oxide by virtue of the high conductivity of the carbon nanotube; furthermore, a hollow tube inside the carbon nanotube can accommodate an electrolyte solution, the electrolyte solution can be in contact with the lithium-rich metal oxide core through the hollow tube, and the hollow tube can also be used as an ion channel for transporting lithium ions. Therefore, by selecting the carbon nanotube as the carbonaceous material, it is conducive to further improving the conductivity of the lithium-rich metal oxide.

Optionally, the carbon nanotube includes one or more of single-walled carbon nanotubes, and multi-walled carbon nanotubes. This facilitates the flexible selection of different types of carbon nanotubes according to an actual situation.

In some embodiments, the carbon nanotube has a length-to-diameter ratio of 100:1 to 1000:1, and optionally 200:1 to 400:1. In this way, the cladding effect on the lithium-rich metal oxide core and the conductivity of the lithium-rich metal oxide both can be achieved.

In some embodiments, the softening temperature of the organic matter is less than the temperature of sintering. Optionally, the softening temperature of the organic matter is not higher than 450°C, and optionally, not higher than 300°C. In this way, the organic matter is softened at the sintering temperature to be in a flow state, which is conducive to achieving a uniform, dense cladding on the lithium-rich metal oxide core.

In some embodiments, the organic matter includes one or more of rubber, pitch, polypropylene, polyethylene, polystyrene, polycarbonate, polymethyl methacrylate, polyethylene terephthalate, polyvinylidene difluoride, and polytetrafluoroethylene. Optionally, the organic matter includes one or more of rubber, pitch and polyvinylidene difluoride. This facilitates flexible selection of the material of the organic matter according to an actual need.

In some embodiments, the providing a lithium-rich metal oxide core includes: mix a Li source and a $M^n$ source evenly according to a molar ratio of $(a+0.05):1$ to $a:1$ and then conduct single heating-up sintering in an inert atmosphere at a sintering temperature of 400°C to 600°C for 4 h to 8 h; where the Li source includes one or more of lithium oxide, lithium carbonate, lithium oxalate, lithium acetate, and lithium hydroxide, and the $M^n$ source includes one or more of oxides, hydroxides, halides, sulfates, carbonates, nitrates, oxalates, acetates, sulfides, and nitrides of $M^n$; optionally, the sintering temperature is 450°C to 550°C; and optionally, the inert atmosphere includes one or more of nitrogen gas, argon gas, and helium gas; and subject a product obtained after single heating-up sintering to airflow crushing to obtain the lithium-rich metal oxide core. In this way, a suitable lithium-rich metal oxide core is prepared, which is conducive to subsequent preparation of the lithium-rich metal oxide. In addition, the lithium-rich metal oxide core is prepared at a lower sintering temperature according to the method, which is conducive to lowering the cost, while reducing the volatilization of lithium.

[Positive electrode plate]

The present application provides a positive electrode plate including the lithium-rich metal oxide according to any embodiment.

[Battery cell]

The present application provides a battery cell including the positive electrode plate according to the above embodiment.

The shape of the battery cell is not particularly limited in the present application, and may be cylindrical, prismatic or in any other shape.

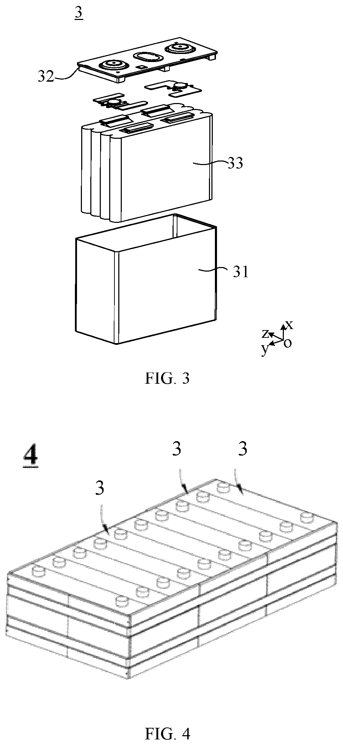

FIG. 3 is a schematic diagram of a battery cell according to an embodiment of the present application. As shown in FIG. 3, the battery cell 3 includes a housing 31, a cover plate 32 and an electrode assembly 33 disposed in the housing 31.

The electrode assembly 33 may be made from the positive electrode plate, the negative electrode plate, and the separator of the present application by a winding process or a stacking process.

Optionally, the battery cell 3 further includes an electrolyte. The electrolyte may be in a solid state, semi-solid state, or liquid state, without being particularly limited herein.

In some embodiments, the battery cell may be assembled into a battery module. The battery module may include one or a plurality of battery cells, and the specific number of battery cells in a battery module may be selected by a person skilled in the art depending on practical applications and capacity of the battery module.

FIG. 4 is a schematic diagram of a battery module according to an embodiment of the present application. Referring to FIG. 4, in the battery module 4, the plurality of battery cells 3 may be arranged sequentially in a length direction of the battery module 4. Certainly, the plurality of battery cells 3 may also be arranged in any other manner. Further, the plurality of battery cells 3 may be secured by fasteners.

Optionally, the battery module 4 may further include a shell provided with an accommodation space. The plurality of battery cells 3 are accommodated in the accommodation space.

[Battery]

The present application provides a battery including the battery cell according to the above embodiment.

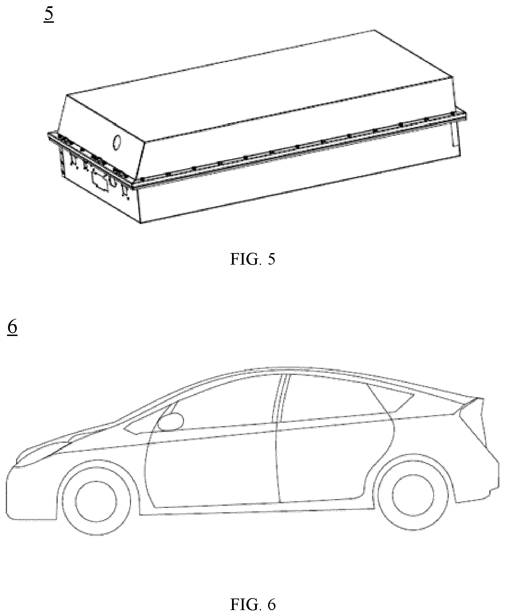

FIG. 5 is a schematic diagram of a battery according to an embodiment of the present application. As shown in FIG. 5, the present application provides a battery 5 including the battery cell 3 according to any of the above embodiments.

The battery cell 3 may directly form the battery 5, or may first form a plurality of battery modules that are then used to form the battery 5.

[Electrical device]

The present application provides an electrical device including the battery according to the above embodiment.
FIG. 6 is a schematic diagram of an electrical device according to an embodiment of the present application. As shown in FIG. 6, the present application provides an electrical device 6 including the battery 5 according to the above embodiment.
Embodiments of the present application are described hereinafter. The embodiments described below are illustrative, and are merely intended to construe the present application but not to limit the present application. Unless techniques or conditions are otherwise expressly specified in an embodiment hereof, the techniques or conditions described in the literature in this field or in an instruction manual of the product are applicable to the embodiment. The reagents or instruments used without specifying the manufacturer are conventional products available commercially.

[Embodiments]

Embodiments 1-9

The difference between Embodiment 1 and Embodiments 2-9 lies in the ratio of the mass of the cladding layer to the mass of the lithium-rich metal oxide, that is, the total content of the cladding layer is different.

Embodiments 10-15

The difference between Embodiment 1 and Embodiments 10-15 lies in the ratio of the mass of the carbon nanotube to the mass of the lithium-rich metal oxide, that is, the content of the carbon nanotube is different.

Embodiments 16-21

The difference between Embodiment 1 and Embodiments 16-21 lies in the median particle diameter of the lithium-rich metal oxide.

Embodiments 22-28

The difference between Embodiment 1 and Embodiments 22-28 lies in the length-to-diameter ratio of the carbon nanotube.

Embodiments 29-35

The difference between Embodiment 1 and Embodiments 29-35 lies in the temperature T1, that is, the sintering temperature at which the lithium-rich metal oxide core is prepared is different.

Embodiments 36-41

The difference between Embodiment 1 and Embodiments 36-41 lies in the temperature T2, that is, the temperature at which the lithium-rich metal oxide is prepared using the lithium-rich metal oxide core, the organic matter, and the carbonaceous material is different.

Embodiments 42-45

The difference between Embodiment 1 and Embodiments 42-45 lies in the type of the lithium-rich metal oxide core.

Embodiments 46-48

The difference between Embodiment 1 and Embodiments 46-48 lies in the type of the carbonaceous material.

Embodiments 49-50

The difference between Embodiment 1 and Embodiments 49-50 lies in the type of the organic matter.

Comparative Embodiment 1

In Comparative Embodiment 1, the lithium-rich metal oxide core is not cladded.

Comparative Embodiments 2-3

In Comparative Embodiment 2, the lithium-rich metal oxide core is cladded using only the carbon nanotube, and in Comparative Embodiment 3, the lithium-rich metal oxide core is cladded using only the pitch.

Comparative Embodiments 4-6

In Comparative Embodiment 4, the lithium-rich metal oxide core and the carbon nanotube are only mixed but not sintered; in Comparative Embodiment 5, the lithium-rich metal oxide core and the pitch are only mixed but not sintered; and in Comparative Embodiment 6, the lithium-rich metal oxide core, the carbon nanotube and the pitch are only mixed but not sintered.

[Method for preparing a lithium-rich metal oxide]

(1) Preparation of a lithium-rich metal oxide core

The Li source and the $M^n$ source were mixed evenly according to the molar ratio of (a+0.05):1 to a:1 (where $M^n$ includes any one of $M^1$ to $M^6$) and then subjected to single heating-up sintering in a nitrogen inert atmosphere, where the sintering temperature was referenced to the sintering temperatures T1 of the different embodiments in Table 1, and the sintering time was 4 h to 8 h.

In Embodiments 1-42, the Li source includes lithium hydroxide, and the $M^n$ source includes ferric oxide; in Embodiment 43, the Li source includes lithium hydroxide, and the $M^n$ source includes cobalt hydroxide; in Embodiment 44, the Li source includes lithium hydroxide, and the $M^n$ source includes copper oxide; in Embodiment 45, the Li source includes lithium hydroxide, and the $M^n$ source includes nickel hydroxide; and in Embodiment 46, the Li source includes lithium hydroxide, and the $M^n$ source includes niobium oxide.

The product obtained through the above single heating-up sintering was subjected to airflow crushing to obtain the lithium-rich metal oxide core.

(2) Preparation of the lithium-rich metal oxide

The lithium-rich metal oxide core and the carbonaceous material and organic matter were mixed evenly before a low temperature sintering. The specific sintering temperature T2 and other parameters are referenced to in Table 1. The lithium-rich metal oxide was obtained by sieving after sintering.

[Measurement of a total content of a cladding layer]

The total content W of the cladding layer in the lithium-rich metal oxide can be measured using the high-frequency infrared carbon and sulfur analyzer carbon content analyzer (C content analyzer, model: HCS-140, manufactured by Shanghai Dekai Instruments Co., Ltd.), according to GBT20123-2006 "Determination of total carbon and sulfur content in steel using an infrared absorption method after combustion in a high-frequency induction furnace (conventional method)".

The content Wo of the organic layer in the cladding layer can be measured using a thermal analyzer (model: NETZSCH STA449F3): 20 mg of the lithium-rich metal oxide was weighed and added into a corundum crucible, and a thermal weight loss rate of the lithium-rich metal oxide from 25°C to 800°C under an inert gas atmosphere was tested, where the heating rate can be 10°C/min.

Specifically, 20 mg of the lithium-rich metal oxide was weighed and added to a corundum crucible, and the TG curve of the lithium-rich metal oxide was measured by the thermal analyzer in a nitrogen atmosphere to obtain its thermal weight loss rate (percentage of weight lost in thermal decomposition to the weight of the original sample), $W_{L1}$%, and its softening temperature T. The type of the organic matter was determined by the softening temperature.

The weight loss rate $W_{L2}$% was then obtained according to the TG curve of the organic matter (which can be obtained by consulting the relevant data or through experiments), and then the following was obtained by calculation:

$Wo=W_{L1}/W_{L2}$.

[Measurement of a content and a length-to-diameter ratio of a carbon nanotube]

The content Wc of the carbon nanotube is equal to the total content W of the cladding layer minus the content Wo of the organic matter.

The length-to-diameter ratio of the carbon nanotube can be measured by a transmission electron microscopy. Twenty well-dispersed carbon nanotubes were taken normally, and were measured for their outer diameters and lengths separately, and then an average value was taken as the length-to-diameter ratio of the carbon nanotube.

[Measurement of a median particle diameter $Dv_{50}$ of the lithium-rich metal oxide]

The median particle diameter $Dv_{50}$ in the lithium-rich metal oxide can be measured using a laser particle diameter analyzer with reference to GB/T 19077-2016 particle diameter distribution laser diffraction method.

[Measurement of resistivity of the lithium-rich metal oxide]

Powder of the lithium-rich metal oxide was dried and an appropriate amount of the powder was weighed. Then the powder resistivity of the sample was measured by a powder resistivity tester (ST2722 digital four-probe instrument, manufactured by Suzhou Jingge Electronic Co., Ltd.) according to GB/T 30835-2014, "Carbon Composite Lithium Iron Phosphate Lithium-rich Metal Oxides for Lithium-ion Batteries". The test pressure was 20 MPa.

[Preparation of a lithium-ion battery]

Preparation of a positive electrode plate: a lithium-rich metal oxide, a binder polyvinylidene fluoride (PVDF), and a conductive agent acetylene black were dissolved in a solvent N-methyl-pyrrolidone (NMP) according to the mass ratio of 97: 2: 1, and full stirring and mixing was conducted to obtain a positive electrode slurry; and the positive electrode slurry was evenly coated on a positive current collector aluminum foil, and drying, cold pressing, and slitting were performed to obtain a positive electrode plate. In the preparation of the positive electrode plate, the lithium-rich metal oxide was used as an active material, and no other active materials were added.

Preparation of a negative electrode plate: a negative active material artificial graphite, a conductive agent acetylene black, a binder styrene-butadiene rubber (SBR), and a thickening agent sodium carboxymethyl cellulose (CMC-Na) were dissolved in deionized water according to the mass ratio of 96: 1.5: 1.5: 1.0, and full stirring and mixing was conducted to obtain a negative electrode slurry; and the negative electrode slurry was evenly coated on a negative current collector copper foil, and drying, cold pressing, and slitting were performed obtain a negative electrode plate.

Separator: Polypropylene film was used.

Preparation of an electrolyte solution: ethylene carbonate (EC), ethyl methyl carbonate (EMC), and diethyl carbonate (DEC) were mixed according to a volume ratio of 1:1:1, and LiPF6 was evenly dissolved in the forgoing solution to obtain an electrolyte solution. In the electrolyte solution, the concentration of $LiPF_6$ was 1 mol/L.

Preparation of a lithium-ion battery: the positive electrode plate, the separator, and the negative electrode plate were stacked in sequence, and the stacked structure was wound to obtain an electrode assembly; the electrode assembly was placed into an outer package, the electrolyte solution prepared above was injected, and steps such as packaging, standing, chemical formation, and aging were performed to obtain a lithium-ion battery.

[Measurement of a first turn charging capacity of the lithium-ion battery]

The assembled lithium-ion battery was charged to 4.25 V at a constant current rate of 0.1 C, and left to stand for 5 min, and at this moment, the first turn charging capacity of the lithium-ion battery was recorded; and the first turn charging capacity of the battery was divided by the mass of the lithium-rich metal oxide to obtain the first turn charging gram capacity of the lithium-ion battery.

[Measurement of diffusion coefficient of lithium ions]

The diffusion coefficient of lithium ions can be measured using conventional methods in the field such as Cyclic Voltammetry (CV), Electrochemical Impedance Spectroscopy (EIS), Galvanostatic Intermittent Titration Technique (GITT), and Potentiostatic Intermittent Titration Technique (PITT), and can be calculated based on Fick's first and second laws.

Taking GITT as an example for specific illustration, the diffusion coefficient of lithium ions of the lithium-rich metal oxide serving as the positive active material was measured according to the following steps: grinding the lithium-rich metal oxide into a powder microelectrode; and connecting the powder microelectrode to an electrochemical workstation for coulometric titration. In this case, a pulse current of 20 $\mu$A was used, and the titration time was 1 h with an interval of 4 h. (Note: To compare the effects of pulse current and time, parallel experiments of 10 $\mu$A for 10 min can be performed.) After obtaining the GITT curve, the diffusion coefficient of lithium ions was calculated by using the following equation:

$$D_{Li} = \frac{4}{\pi}\left(\frac{V_m}{AFn}\right)^2\left[I_0\left(\frac{dE}{dx}\right)/\left(\frac{dE}{d\sqrt{t}}\right)\right]^2 (t \ll L^2/D)$$ where $D_{Li}$ is the diffusion coefficient of lithium ions; I0 is the applied current of 20 $\mu$A; $V_m$ is the molar volume of the lithium-rich metal oxide of the active substance; F is a Faraday's constant; A is the surface area of the electrode, n is the number of electrons participating in the reaction, which is also interpreted as the number of charges of the lithium ions, i.e., n may be 1, dE/dx is the slope of a coulometric titration curve, i.e., the slope of a curve of an open-circuit potential vs a concentration value of lithium ions in the electrode at a certain concentration; and (dE)/(dt1/2) is the slope of a curve of a polarization voltage vs t1/2. Specific references can be found in the literature: Xie et al., Solid State Ionics, 2007, 178:1218-1224; Yang et al., Electrochimica Acta, 2012,66:88-93.

As shown in Tables 1 and 2, the specific parameters of different embodiments and comparative embodiments are shown in Table 1, and the experimental results of different embodiments and comparative embodiments are shown in Table 2. Corresponding lithium-ion batteries were prepared from the lithium-rich metal oxides of the different embodiments, the performance of the lithium-ion batteries was tested, and the test results can be found in

Table 2.

In Table 1, the lithium-rich metal oxide core is the type of the lithium-rich metal oxide core selected in the lithium-rich metal oxide, the organic matter is the material of the organic layer in the cladding layer cladding the lithium-rich metal oxide core, the carbonaceous material is the type of the carbonaceous material in the cladding layer, the total content of the cladding layer is the ratio of the weight of the cladding layer to the weight of the lithium-rich metal oxide, the content of the carbon nanotube is the ratio of the weight of the carbon nanotube to the weight of the lithium-rich metal oxide, $Dv_{50}$ is the median particle diameter of the lithium-rich metal oxide, the length-to-diameter ratio of the carbon nanotube is the ratio of the length to the outer diameter of the carbon nanotube in the cladding layer, the temperature T1 is the sintering temperature at which the lithium-rich metal oxide core is prepared, and the temperature T2 is the sintering temperature at which the lithium-rich metal oxide is prepared using the lithium-rich metal oxide core, the organic matter and the carbonaceous material. In Table 1, CNTs represents that the carbonaceous material is the carbon nanotube, P represents that the organic matter is pitch, RB represents that the organic matter is rubber, and PVDF represents that the organic matter is polyvinylidene difluoride.

Table 1 Specific parameters of embodiments and comparative embodiments

| Serial number | Lithium-rich metals Oxides | Carbonaceous material in cladding layer | Organic matter in cladding layer | Cladding layer Total content (wt%) | Content of carbon nanotube (wt%) | $Dv_{50}$ ($\mu$m) | Length-to-diameter ratio of carbon nanotube | T1 (°C) | T2 (°C) |
|---|---|---|---|---|---|---|---|---|---|
| Embodiment 1 | $Li_5FeO_4$ | CNTs | P | 6 | 1 | 6 | 300:1 | 600 | 300 |
| Embodiment 2 | $Li_5FeO_4$ | CNTs | P | 1.1 | 1 | 6 | 300:1 | 600 | 300 |
| Embodiment 3 | $Li_5FeO_4$ | CNTs | P | 2 | 1 | 6 | 300:1 | 600 | 300 |
| Embodiment 4 | $Li_5FeO_4$ | CNTs | P | 3 | 1 | 6 | 300:1 | 600 | 300 |
| Embodiment 5 | $Li_5FeO_4$ | CNTs | P | 4 | 1 | 6 | 300:1 | 600 | 300 |
| Embodiment 6 | $Li_5FeO_4$ | CNTs | P | 7 | 1 | 6 | 300:1 | 600 | 300 |
| Embodiment 7 | $Li_5FeO_4$ | CNTs | P | 8 | 1 | 6 | 300:1 | 600 | 300 |

(continued)

| Serial number | Lithium-rich metals Oxides | Carbonaceous material in cladding layer | Organic matter in cladding layer | Cladding layer Total content (wt%) | Content of carbon nanotube (wt%) | $Dv_{50}$ ($\mu m$) | Length-to-diameter ratio of carbon nanotube | T1 (°C) | T2 (°C) |
|---|---|---|---|---|---|---|---|---|---|
| Embodiment 8 | $Li_5FeO_4$ | CNTs | P | 10 | 1 | 6 | 300:1 | 600 | 300 |
| Embodiment 9 | $Li_5FeO_4$ | CNTs | P | 12 | 1 | 6 | 300:1 | 600 | 450 |
| Embodiment 10 | $Li_5FeO_4$ | CNTs | P | 6 | 0.2 | 6 | 300:1 | 600 | 300 |
| Embodiment 11 | $Li_5FeO_4$ | CNTs | P | 6 | 0.5 | 6 | 300:1 | 600 | 300 |
| Embodiment 12 | $Li_5FeO_4$ | CNTs | P | 6 | 1.5 | 6 | 300:1 | 600 | 300 |
| Embodiment 13 | $Li_5FeO_4$ | CNTs | P | 6 | 2 | 6 | 300:1 | 600 | 300 |
| Embodiment 14 | $Li_5FeO_4$ | CNTs | P | 6 | 0.05 | 6 | 300:1 | 900 | 300 |
| Embodiment 15 | $Li_5FeO_4$ | CNTs | P | 6 | 4 | 6 | 2000:1 | 400 | 50 |
| Embodiment 16 | $Li_5FeO_4$ | CNTs | P | 6 | 1 | 2 | 300:1 | 600 | 300 |
| Embodiment 17 | $Li_5FeO_4$ | CNTs | P | 6 | 1 | 4 | 300:1 | 600 | 300 |
| Embodiment 18 | $Li_5FeO_4$ | CNTs | P | 6 | 1 | 8 | 300:1 | 600 | 300 |
| Embodiment 19 | $Li_5FeO_4$ | CNTs | P | 6 | 1 | 10 | 300:1 | 600 | 300 |
| Embodiment 20 | $Li_5FeO_4$ | CNTs | P | 6 | 1 | 0.5 | 300:1 | 600 | 300 |
| Embodiment 21 | $Li_5FeO_4$ | CNTs | P | 6 | 1 | 12 | 300:1 | 600 | 300 |
| Embodiment 22 | $Li_5FeO_4$ | CNTs | P | 6 | 1 | 6 | 100:1 | 600 | 300 |
| Embodiment 23 | $Li_5FeO_4$ | CNTs | P | 6 | 1 | 6 | 200:1 | 600 | 300 |
| Embodiment 24 | $Li_5FeO_4$ | CNTs | P | 6 | 1 | 6 | 400:1 | 600 | 300 |
| Embodiment 25 | $Li_5FeO_4$ | CNTs | P | 6 | 1 | 6 | 500:1 | 600 | 300 |
| Embodiment 26 | $Li_5FeO_4$ | CNTs | P | 6 | 1 | 6 | 1000:1 | 600 | 300 |
| Embodiment 27 | $Li_5FeO_4$ | CNTs | P | 6 | 1 | 6 | 50:1 | 600 | 300 |
| Embodiment 28 | $Li_5FeO_4$ | CNTs | P | 6 | 1 | 6 | 1500:1 | 600 | 300 |

(continued)

| Serial number | Lithium-rich metals Oxides | Carbonaceous material in cladding layer | Organic matter in cladding layer | Cladding layer Total content (wt%) | Content of carbon nanotube (wt%) | $Dv_{50}$ ($\mu$m) | Length-to-diameter ratio of carbon nanotube | T1 (°C) | T2 (°C) |
|---|---|---|---|---|---|---|---|---|---|
| Embodiment 29 | $Li_5FeO_4$ | CNTs | P | 6 | 1 | 6 | 300:1 | 400 | 300 |
| Embodiment 30 | $Li_5FeO_4$ | CNTs | P | 6 | 1 | 6 | 300:1 | 450 | 300 |
| Embodiment 31 | $Li_5FeO_4$ | CNTs | P | 6 | 1 | 6 | 300:1 | 500 | 300 |
| Embodiment 32 | $Li_5FeO_4$ | CNTs | P | 6 | 1 | 6 | 300:1 | 550 | 300 |
| Embodiment 33 | $Li_5FeO_4$ | CNTs | P | 6 | 1 | 6 | 300:1 | 600 | 300 |
| Embodiment 34 | $Li_5FeO_4$ | CNTs | P | 6 | 1 | 6 | 300:1 | 300 | 300 |
| Embodiment 35 | $Li_5FeO_4$ | CNTs | P | 6 | 1 | 6 | 300:1 | 800 | 300 |
| Embodiment 36 | $Li_5FeO_4$ | CNTs | P | 6 | 1 | 6 | 300:1 | 600 | 500 |
| Embodiment 37 | $Li_5FeO_4$ | CNTs | P | 6 | 1 | 6 | 300:1 | 600 | 400 |
| Embodiment 38 | $Li_5FeO_4$ | CNTs | P | 6 | 1 | 6 | 300:1 | 600 | 350 |
| Embodiment 39 | $Li_5FeO_4$ | CNTs | P | 6 | 1 | 6 | 300:1 | 600 | 250 |
| Embodiment 40 | $Li_5FeO_4$ | CNTs | P | 6 | 1 | 6 | 300:1 | 600 | 100 |
| Embodiment 41 | $Li_5FeO_4$ | CNTs | P | 6 | 1 | 6 | 300:1 | 600 | 600 |
| Embodiment 42 | $Li_6CoO_4$ | CNTs | P | 6 | 1 | 6 | 300:1 | 600 | 300 |
| Embodiment 43 | $Li_2CuO_2$ | CNTs | P | 6 | 1 | 6 | 300:1 | 600 | 300 |
| Embodiment 44 | $Li_2NiO_2$ | CNTs | P | 6 | 1 | 6 | 300:1 | 600 | 300 |
| Embodiment 45 | $Li_3NbO_4$ | CNTs | P | 6 | 1 | 6 | 300:1 | 600 | 300 |
| Embodiment 46 | $Li_5FeO_4$ | carbon black | P | 6 | 1 | 6 | / | 600 | 300 |
| Embodiment 47 | $Li_5FeO_4$ | Graphene | P | 6 | 1 | 6 | / | 600 | 300 |
| Embodiment 48 | $Li_5FeO_4$ | Carbon nanofibers | P | 6 | 1 | 6 | / | 600 | 300 |
| Embodiment 49 | $Li_5FeO_4$ | CNTs | RB | 6 | 1 | 6 | 300:1 | 600 | 180 |

(continued)

| Serial number | Lithium-rich metals Oxides | Carbonaceous material in cladding layer | Organic matter in cladding layer | Cladding layer Total content (wt%) | Content of carbon nanotube (wt%) | $Dv_{50}$ ($\mu$m) | Length-to-diameter ratio of carbon nanotube | T1 (°C) | T2 (°C) |
|---|---|---|---|---|---|---|---|---|---|
| Embodiment 50 | $Li_5FeO_4$ | CNTs | PVDF | 6 | 1 | 6 | 300:1 | 600 | 200 |
| Comparative Embodiment 1 | $Li_5FeO_4$ | / | / | 0 | 0 | 6 | / | 600 | / |
| Comparative Embodiment 2 | $Li_5FeO_4$ | CNTs | / | 6 | 6 | 6 | 300:1 | 600 | 300 |
| Comparative Embodiment 3 | $Li_5FeO_4$ | P | / | 6 | 0 | 6 | / | 600 | 300 |
| Comparative Embodiment 4 | $Li_5FeO_4$/ CNTs | / | / | 6 | 6 | 6 | 300:1 | 600 | / |
| Comparative Embodiment 5 | $Li_5FeO_4$/ P | / | / | 6 | 0 | 6 | / | 600 | / |
| Comparative Embodiment 6 | $Li_5FeO_4$/ CNTs&P | / | / | 6 | 1 | 6 | 300:1 | 600 | / |

Table 2 Test results of embodiments and comparative embodiments

| | First turn charging capacity (mAh/g) | Diffusion coefficient of lithium ions (cm²/s) | Powder resistivity of lithium-rich metal oxides ($\Omega \cdot cm$) |
|---|---|---|---|
| Embodiment 1 | 685 | $1.244 \times 10^{-12}$ | 0.445 |
| Embodiment 2 | 617 | $8.834 \times 10^{-20}$ | 4.143 |
| Embodiment 3 | 628 | $1.015 \times 10^{-18}$ | 3.251 |
| Embodiment 4 | 645 | $6.734 \times 10^{-17}$ | 2.021 |
| Embodiment 5 | 663 | $1.538 \times 10^{-15}$ | 1.682 |
| Embodiment 6 | 671 | $9.455 \times 10^{-13}$ | 0.856 |
| Embodiment 7 | 666 | $1.281 \times 10^{-15}$ | 1.433 |
| Embodiment 8 | 627 | $9.139 \times 10^{-19}$ | 3.289 |
| Embodiment 9 | 611 | $1.631 \times 10^{-20}$ | 4.341 |
| Embodiment 10 | 618 | $7.890 \times 10^{-20}$ | 4.332 |
| Embodiment 11 | 657 | $4.375 \times 10^{-16}$ | 1.896 |
| Embodiment 12 | 660 | $6.976 \times 10^{-16}$ | 1.842 |
| Embodiment 13 | 641 | $1.028 \times 10^{-17}$ | 2.315 |
| Embodiment 14 | 592 | $2.567 \times 10^{-22}$ | 8.119 |
| Embodiment 15 | 622 | $5.032 \times 10^{-19}$ | 3.915 |
| Embodiment 16 | 633 | $7.937 \times 10^{-18}$ | 3.009 |
| Embodiment 17 | 662 | $9.234 \times 10^{-16}$ | 1.710 |

(continued)

| | First turn charging capacity (mAh/g) | Diffusion coefficient of lithium ions (cm$^2$/s) | Powder resistivity of lithium-rich metal oxides ($\Omega \cdot$cm) |
|---|---|---|---|
| Embodiment 18 | 665 | $3.666 \times 10^{-15}$ | 1.456 |
| Embodiment 19 | 612 | $5.334 \times 10^{-20}$ | 5.886 |
| Embodiment 20 | 609 | $1.068 \times 10^{-20}$ | 6.139 |
| Embodiment 21 | 601 | $0.115 \times 10^{-20}$ | 8.119 |
| Embodiment 22 | 604 | $1.376 \times 10^{-20}$ | 7.325 |
| Embodiment 23 | 681 | $1.041 \times 10^{-12}$ | 0.468 |
| Embodiment 24 | 661 | $1.456 \times 10^{-15}$ | 1.693 |
| Embodiment 25 | 653 | $3.456 \times 10^{-16}$ | 1.967 |
| Embodiment 26 | 607 | $8.336 \times 10^{-20}$ | 6.557 |
| Embodiment 27 | 594 | $5.589 \times 10^{-21}$ | 7.998 |
| Embodiment 28 | 603 | $1.034 \times 10^{-20}$ | 7.673 |
| Embodiment 29 | 523 | $1.431 \times 10^{-25}$ | 24.237 |
| Embodiment 30 | 541 | $2.114 \times 10^{-24}$ | 22.821 |
| Embodiment 31 | 597 | $1.336 \times 10^{-22}$ | 10.219 |
| Embodiment 32 | 638 | $0.758 \times 10^{-17}$ | 2.621 |
| Embodiment 33 | 685 | $1.244 \times 10^{-12}$ | 0.445 |
| Embodiment 34 | 505 | $3.050 \times 10^{-27}$ | 24.237 |
| Embodiment 35 | 632 | $7.629 \times 10^{-18}$ | 3.133 |
| Embodiment 36 | 601 | $1.347 \times 10^{-20}$ | 7.853 |
| Embodiment 37 | 583 | $1.347 \times 10^{-23}$ | 15.325 |
| Embodiment 38 | 652 | $2.625 \times 10^{-16}$ | 1.943 |
| Embodiment 39 | 619 | $9.512 \times 10^{-20}$ | 4.132 |
| Embodiment 40 | 561 | $7.339 \times 10^{-23}$ | 18.321 |
| Embodiment 41 | 532 | $7.557 \times 10^{-25}$ | 23.498 |
| Embodiment 42 | 385 | $1.324 \times 10^{-12}$ | 0.430 |
| Embodiment 43 | 423 | $1.632 \times 10^{-8}$ | 0.546 |
| Embodiment 44 | 424 | $1.972 \times 10^{-8}$ | 0.539 |
| Embodiment 45 | 392 | $1.521 \times 10^{-9}$ | 0.528 |
| Embodiment 46 | 605 | $1.571 \times 10^{-20}$ | 7.205 |
| Embodiment 47 | 621 | $6.234 \times 10^{-19}$ | 3.731 |
| Embodiment 48 | 635 | $8.879 \times 10^{-18}$ | 3.001 |
| Embodiment 49 | 672 | $3.244 \times 10^{-12}$ | 0.562 |
| Embodiment 50 | 671 | $3.345 \times 10^{-12}$ | 0.568 |
| Comparative Embodiment 1 | 428 | $1.572 \times 10^{-50}$ | 181652.212 |
| Comparative Embodiment 2 | 482 | $1.651 \times 10^{-38}$ | 529.861 |
| Comparative Embodiment 3 | 456 | $2.452 \times 10^{-45}$ | 2785.453 |
| Comparative Embodiment 4 | 453 | $7.851 \times 10^{-45}$ | 2630.393 |
| Comparative Embodiment 5 | 441 | $6.552 \times 10^{-50}$ | 161652.212 |

(continued)

| | First turn charging capacity (mAh/g) | Diffusion coefficient of lithium ions (cm²/s) | Powder resistivity of lithium-rich metal oxides (Ω·cm) |
|---|---|---|---|
| Comparative Embodiment 6 | 473 | $3.631 \times 10^{-37}$ | 896.256 |

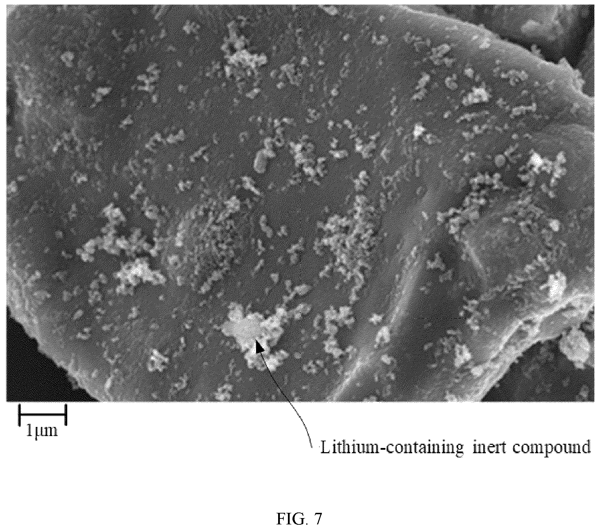

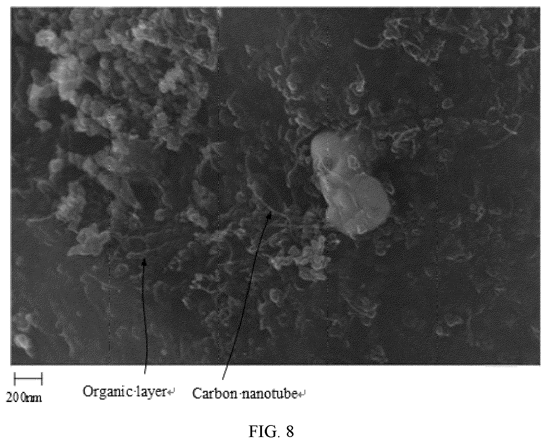

FIG. 7 is a schematic diagram of a scanning electron microscope of a lithium-rich metal oxide core lithium-rich metal oxide not cladded with a cladding layer; and FIG. 8 is a schematic diagram of a scanning electron microscope of a lithium-rich metal oxide core lithium-rich metal oxide cladded with a cladding layer according to the present application.

Combining Comparative Embodiment 1 with Embodiments 1-50, the resistivity of the lithium-rich metal oxide not cladded with a cladding layer is much greater than that of the lithium-rich metal oxide cladded with a cladding layer, and the first turn charging capacity and the diffusion coefficient of lithium ions of a battery made of the lithium-rich metal oxide not cladded with a cladding layer are much lower than those of a battery made of the lithium-rich metal oxide cladded with a cladding layer.

Combined with FIG. 7, an inert lithium-containing inert compound is present on the surface of the lithium-rich metal oxide, and the lithium-containing inert compound affects the diffusion coefficient of lithium ions, the conductivity of the lithium-rich metal oxide, the charging capacity of the lithium-ion battery, and other performances. Combined with FIG. 8, the surface of the lithium-rich metal oxide core is cladded with a cladding layer, and the cladding layer is embedded with a carbon nanotube. Combined with Embodiment 1 and test data thereof, the performance of the lithium-rich metal oxide set with the cladding layer is significantly improved.

Combined with Embodiments 1-9, by reasonably setting the content of the cladding layer, the capacity of the battery and the diffusion coefficient of the lithium ion both can be achieved; when the content of the cladding layer is lower, the cladding effect is weakened, and the charging capacity of the battery is reduced; and when the content of the cladding layer is higher, the deintercalation of lithium ions is affected, and the charging capacity of the battery is reduced.

Combined with Embodiments 10-13, by reasonably setting the content of the carbon nanotube, the conductivity of the lithium-rich metal oxide, the capacity of the battery, and the diffusion coefficient of lithium ions all can be achieved; combined with Embodiment 14, when the content of the carbon nanotube is lower, the conductivity of powder of the lithium-rich metal oxide is reduced; and combined with Embodiment 15, when the content of the carbon nanotube is higher, the charging capacity of the battery is reduced.

Combined with Embodiments 16-19, by reasonably setting the median particle diameter of the lithium-rich metal oxide, the cladding uniformity and the capacity of the lithium-rich metal oxide both can be achieved, which is conducive to ensuring the capacity of the battery; combined with Embodiment 20, when the median particle diameter of the lithium-rich metal oxide is smaller, the charging capacity of the battery is reduced; and combined with Embodiment 21, when the median particle diameter of the lithium-rich metal oxide is greater, the charging capacity of the battery is reduced.

Combined with Embodiments 22-26, by reasonably setting the length-to-diameter ratio of the carbon nanotube, the capacity of the battery and the conductivity of the lithium-rich metal oxide both can be achieved; combined with Embodiment 27, when the length-to-diameter ratio of the carbon nanotube is smaller, the diffusion coefficient of lithium ions is lower; and combined with Embodiment 28, when the length-to-diameter ratio of the carbon nanotube is greater, the charging capacity of the battery is reduced.

Combined with Embodiments 29-33, by reasonably setting the temperature T1, the capacity of the battery and the diffusion coefficient of lithium ions both can be maintained; combined with Embodiment 34, when the temperature of single sintering is lower, the capacity of the battery is reduced; combined with Embodiment 35, when the temperature of single sintering is higher, the diffusion coefficient of lithium ions is reduced.

Combined with Embodiments 36-41, by reasonably setting the temperature T2, the conductivity and stability of the lithium-rich metal oxide, the capacity of the battery, and the diffusion coefficient of lithium ions all can be achieved.

Combined with Embodiments 42-45, surfaces of a plurality of lithium-rich metal oxide cores can be cladded with the cladding layer of the present application, so as to improve the performance of the battery. Combined with Embodiments 46-48, a plurality of different carbonaceous materials can be adopted for cladding the lithium-rich metal oxide core, which can improve the conductivity of the lithium-rich metal oxide. Combined with Embodiments 49-50, a plurality of different organic matters can be applied for cladding the lithium-rich metal oxide core.

Combined with Comparative Embodiments 2-3 and Embodiments 1-50, when only the carbon nanotube or the organic matter is adopted for cladding, it is difficult to achieve both the capacity of the battery and the conductivity of the lithium-rich metal oxide.

Combined with Comparative Embodiments 4-6 and Embodiments 1-44, it is difficult to form a cladding layer when a few materials are simply mixed.

It is hereby noted that the present application is not limited to the foregoing embodiments. The foregoing embodiments are illustrative merely, and any and all embodiments with substantively the same constituents or exerting the same effects as the technical ideas hereof without departing from the scope of the technical solutions of the present application still fall within the technical scope of the present application. In addition, all kinds of variations of the embodiments conceivable by a person skilled in the art and any other embodiments derived by combining some constituents of the embodiments hereof without departing from the subject-matter of the present application still fall within the scope of the present application.

**Claims**

1. A lithium-rich metal oxide, **characterized in that** the lithium-rich metal oxide comprises:

    a lithium-rich metal oxide core; and
    a cladding layer, wherein the cladding layer comprises an organic layer and a carbonaceous material, the organic layer clads the lithium-rich metal oxide core, and at least a portion of the carbonaceous material is embedded in the organic layer.

2. The lithium-rich metal oxide according to claim 1, **characterized in that** at least a portion of the carbonaceous material penetrates through the organic layer.

3. The lithium-rich metal oxide according to claim 1 or 2, **characterized in that** the carbonaceous material comprises a monolithic carbon material; optionally, the monolithic carbon material comprises a one-dimensional carbon material; and optionally, the one-dimensional carbon material comprises a carbon nanotube.

4. The lithium-rich metal oxide according to claim 3, **characterized in that** the carbon nanotube comprises one or more of single-walled carbon nanotubes and multi-walled carbon nanotubes.

5. The lithium-rich metal oxide according to claim 3 or 4, **characterized in that** the carbon nanotube has a length-to-diameter ratio of 100:1 to 1000:1, and optionally 200:1 to 400:1.

6. The lithium-rich metal oxide according to any one of claims 3 to 5, **characterized in that** a mass ratio of the carbon nanotube to the lithium-rich metal oxide is 0.2% to 2%, and optionally 0.5% to 1.5%.

7. The lithium-rich metal oxide according to any one of claims 1 to 6, **characterized in that** the organic layer has a softening temperature not higher than 450°C, and optionally, not higher than 300°C.

8. The lithium-rich metal oxide according to any one of claims 1 to 7, **characterized in that** the lithium-rich metal oxide has a median particle diameter $Dv_{50}$ of 2 $\mu$m to 10 $\mu$m, and optionally 4 $\mu$m to 8 $\mu$m.

9. The lithium-rich metal oxide according to any one of claims 1 to 8, **characterized in that** a mass ratio of the cladding layer to the lithium-rich metal oxide is 1% to 10%, and optionally 3% to 7%.

10. The lithium-rich metal oxide according to any one of claims 1 to 9, **characterized in that** a material of the lithium-rich metal oxide core comprises $Li_aM^nO_y$, and $2 \leq a \leq 8$, wherein the $Li_aM^nO_y$ comprises one or more of $Li_2M^1O_2$, $Li_2M^2O_3$, $Li_3M^3O_4$, $Li_5N^4O_4$, $Li_6M^5O_4$, and $Li_8M^6O_6$;

    $M^1$ comprises one or more of Ni, Co, Fe, Mn, Zn, Mg, Ca, Cu, and Mo;
    $M^2$ comprises one or more of Mn, Sn, Mo, Ru, and Ir;
    $M^3$ comprises one or more of V, Nb, Cr, and Mo;
    $M^4$ comprises one or more of Fe, Cr, V, and Mo;
    $M^5$ comprises one or more of Co, V, Cr, and Mo; and
    $M^6$ comprises Sn; and
    optionally, the $Li_aM^nO_y$ comprises one or more of $Li_2NiO_2$, $Li_2CuO_2$, $Li_2MnO_3$, $Li_3VO_4$, $Li_3NbO_4$, $Li_5FeO_4$, $Li_6CoO_4$, and $Li_8SnO_6$.

11. The lithium-rich metal oxide according to any one of claims 1 to 10, **characterized in that** a material of the organic layer comprises one or more of rubber, pitch, polypropylene, polyethylene, polystyrene, polycarbonate, polymethyl methacrylate, polyethylene terephthalate, polyvinylidene difluoride, and polytetrafluoroethylene; and optionally, a material of the organic layer comprises one or more of rubber, pitch and polyvinylidene difluoride.

12. A method for preparing a lithium-rich metal oxide, **characterized in that** the method comprises:

  providing a lithium-rich metal oxide core, a carbonaceous material, and an organic matter; and
  mixing the lithium-rich metal oxide core, the carbonaceous material and the organic matter, and conducting treatment to obtain the lithium-rich metal oxide.

13. The method according to claim 12, **characterized in that** the treatment comprises: sintering in an inert atmosphere for 2 h to 6 h, wherein optionally, the inert atmosphere comprises one or more of nitrogen gas, argon gas and helium gas; and/or,
a temperature of the treatment is not higher than 500°C, and optionally, the temperature of the treatment is not higher than 300°C.

14. The method according to claim 12 or 13, **characterized in that** the method further comprises:
sieving a product obtained after the treatment to obtain the lithium-rich metal oxide.

15. The method according to any one of claims 12 to 14, **characterized in that** the carbonaceous material comprises a monolithic carbon material; optionally, the monolithic carbon material comprises a one-dimensional carbon material; and optionally, the one-dimensional carbon material comprises a carbon nanotube.

16. The method according to claim 15, **characterized in that** the carbon nanotube comprises one or more of single-walled carbon nanotubes and multi-walled carbon nanotubes.

17. The method according to claim 15 or 16, **characterized in that** the carbon nanotube has a length-to-diameter ratio of 100:1 to 1000:1, and optionally 200:1 to 400: 1.

18. The method according to any one of claims 12 to 17, **characterized in that** the organic matter has a softening temperature less than the temperature of the treatment; optionally, the organic matter has a softening temperature not higher than 450°C; and optionally, the organic matter has a softening temperature not higher than 300°C.

19. The method according to any one of claims 12 to 18, **characterized in that** the organic matter comprises one or more of rubber, pitch, polypropylene, polyethylene, polystyrene, polycarbonate, polymethyl methacrylate, polyethylene terephthalate, polyvinylidene difluoride, and polytetrafluoroethylene; and optionally, the organic matter comprises one or more of rubber, pitch and polyvinylidene difluoride.

20. The method according to any one of claims 12 to 19, **characterized in that** the providing a lithium-rich metal oxide core comprises:

  mixing a Li source and a $M^n$ source evenly according to a molar ratio of $(a+0.05):1$ to $a:1$ and then conducting single heating-up sintering in an inert atmosphere at a sintering temperature of 400°C to 600°C for 4 h to 8 h; wherein the Li source comprises one or more of lithium oxide, lithium carbonate, lithium oxalate, lithium acetate, and lithium hydroxide, and the $M^n$ source comprises one or more of oxides, hydroxides, halides, sulfates, carbonates, nitrates, oxalates, acetates, sulfides, and nitrides of $M^n$; optionally, the sintering temperature is 450°C to 550°C; and optionally, the inert atmosphere comprises one or more of nitrogen gas, argon gas, and helium gas; and
  subjecting a product obtained after the single heating-up sintering to airflow crushing to obtain the lithium-rich metal oxide core.

21. A positive electrode plate, **characterized in that** the positive electrode plate comprises the lithium-rich metal oxide according to any one of claims 1 to 11.

22. A battery cell, **characterized in that** the battery cell comprises the positive electrode plate according to claim 21.

23. A battery, **characterized in that** the battery comprises the battery cell according to claim 22.

24. An electrical device, **characterized in that** the electrical device comprises the battery according to claim 23.

FIG. 1

FIG. 2

3

32

33

31

z x
y o

FIG. 3

4

3 3

3

FIG. 4

5

FIG. 5

6

FIG. 6

Lithium-containing inert compound

1μm

FIG. 7

200nm      Organic layer     Carbon nanotube

FIG. 8

# EP 4 583 199 A1

## INTERNATIONAL SEARCH REPORT

International application No.

**PCT/CN2023/071227**

### A. CLASSIFICATION OF SUBJECT MATTER

H01M 4/36(2006.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, ENTXT, ENTXTC, DWPI, CNKI: 富锂, 正极, 核, 壳, 包覆, 有机物, 聚合物, 碳, cathode, lithium, rich, core, shell, coat+, polymer, organic, carbon

### C. DOCUMENTS CONSIDERED TO BE RELEVANT

| Category* | Citation of document, with indication, where appropriate, of the relevant passages | Relevant to claim No. |
|---|---|---|
| X | CN 114725539 A (SHENZHEN DEFANGCHUANGYU NEW ENERGY TECHNOLOGY CO., LTD.) 08 July 2022 (2022-07-08) description, paragraphs 4-82 | 1-24 |
| X | CN 106898737 A (BYD CO., LTD.) 27 June 2017 (2017-06-27) description, paragraphs [0006]-[0060] | 1-24 |
| A | CN 112803002 A (CENTRAL SOUTH UNIVERSITY) 14 May 2021 (2021-05-14) entire document | 1-24 |
| A | US 2019207204 A1 (CONTEMPORARY AMPEREX TECHNOLOGY CO., LTD.) 04 July 2019 (2019-07-04) entire document | 1-24 |

☐ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 July 2023** | **18 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/071227**

| Patent document cited in search report | | | Publication date (day/month/year) | Patent family member(s) | | | Publication date (day/month/year) |
|---|---|---|---|---|---|---|---|
| CN | 114725539 | A | 08 July 2022 | WO | 2022170905 | A1 | 18 August 2022 |
| | | | | EP | 4120401 | A1 | 18 January 2023 |
| | | | | US | 2023050246 | A1 | 16 February 2023 |
| CN | 106898737 | A | 27 June 2017 | | None | | |
| CN | 112803002 | A | 14 May 2021 | | None | | |
| US | 2019207204 | A1 | 04 July 2019 | EP | 3480878 | A1 | 08 May 2019 |
| | | | | CN | 107785578 | A | 09 March 2018 |
| | | | | WO | 2018036309 | A1 | 01 March 2018 |
| | | | | EP | 3480878 | A4 | 22 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** *Solid State Ionics*, 2007, vol. 178, 1218-1224

- **YANG et al.** *Electrochimica Acta*, 2012, vol. 66, 88-93